# FASCICULE DE BREVET EUROPEEN

(11) **EP 2 766 246 B1**
(45) Date de publication et mention de la délivrance du brevet: **01.02.2017**
(21) Numéro de dépôt: 12780250.2
(22) Date de dépôt: 12.10.2012
(51) Int. Cl.: B62D 25/06

(54) **TOIT DE VEHICULE EN VERRE COMPRENANT DES ZONES LOCALES DE CONTRAINTE EN COMPRESSION**
FAHRZEUGDACH AUS GLAS MIT LOKALISIERTEN ZONEN UNTER DRUCKSPANNUNG
GLASS VEHICLE ROOF COMPRISING LOCALIZED ZONES UNDER COMPRESSIVE STRESS

(30) Priorité: 14.10.2011 FR 1159324
(43) Date de publication de la demande: 20.08.2014
(73) Titulaire: Saint-Gobain Glass France, 92400 Courbevoie (FR)
(72) Inventeur: HENNION, Alexandre, F-60280 Venette (FR); FREBOURG, Philippe, F-60300 Senlis (FR)
(74) Mandataire: Saint-Gobain Recherche
(86) Numéro de dépôt international: PCT/FR2012/052330
(87) Numéro de publication internationale: WO 2013/054060

(56) Documents cités:
- EP-A1- 1 375 307
- US-A1- 2008 106 124
- US-A1- 2009 148 642

## Description

L'invention concerne un produit en verre pour un véhicule, notamment automobile, notamment un toit muni ou pouvant être muni d'orifices pour le passage d'arbres de fixation de barres de toit. Le verre peut être un verre trempé ou un verre feuilleté.

Le document US 2009/148642 A1 divulgue l'objet du préambule de la revendication 1.

Les toits en verre sont particulièrement intéressants dans les applications automobiles. En effet, grâce à la transparence du matériau, les toits, notamment larges permettent d'augmenter l'impression d'espace à l'intérieur du véhicule, ce qui est très apprécié du constructeur et du client final. Comparé à une pièce en verre trempé monolithique (comprenant une seule feuille de verre trempé), un toit feuilleté améliore la sécurité passive du véhicule car il peut résister à un retournement de ce dernier (cas dit de tonneau). Par ailleurs, cela évite, en cas de casse inopinée, que des morceaux de verre, même de petite taille, ne tombent sur les passagers. L'usage de pièces feuilletées en toiture peut donc être recommandé dès lors que leur taille est importante. Comparé à un toit en matière plastique, un toit en verre minéral feuilleté est intéressant pour sa résistance au vieillissement, à la rayure et pour son coût.

Actuellement les toits en verre, notamment larges, s'accommodent mal des barres de toit qui sont en général proposées de série ou en option sur les véhicules. La présence de ces barres de toit est cependant importante pour plusieurs raisons : a) elles participent à la ligne générale de certains types de véhicules comme les breaks ou les SUV (sport & utility vehicles) ; b) elles sont nécessaires pour installer un coffre à bagage additionnel sur le toit du véhicule, un porte vélo, etc.

La volonté des constructeurs automobile est d'élargir au maximum la partie transparente du vitrage. La solution habituellement adoptée pour pouvoir fixer les barres de toit consiste à effectuer des encoches, c'est à dire une découpe « rentrante » le long du bord du verre. Suivant que les barres de toit sont en option ou non, le véhicule est monté avec le même vitrage possédant des encoches. Lorsque les barres de toit ne sont pas présentes, l'espace laissé libre est comblé par un enjoliveur généralement peu esthétique.

Les designers qui apprécient la qualité esthétique du verre expriment le besoin d'avoir des surfaces qui recouvrent les parties latérales du toit, voire qui puissent aller jusqu'aux bords supérieurs des portières.

De plus, les encoches sont difficiles à réaliser par les procédés classiques de transformation automobile. La réalisation de ces encoches engendre de nombreux réglages, des rebuts et de nombreux retours qualité. Les encoches sont régulièrement la source d'écailles ou de casses lors de l'opération de rompage ainsi que de « brûlage » lors du façonnage. De plus, lors du bombage par gravité des feuilles de verre, notamment de feuilles superposées, la présence d'encoches rend le verre délicat à maintenir sur l'outillage pendant toute la phase de formage, ce qui se traduit parfois par un décollement du verre de son outillage, le rendant impropre à la commercialisation. La mise au point de l'outillage et du programme de chauffe sont long et délicats et les rebuts en production sensiblement plus élevés que pour les volumes sans encoches. De plus, l'aspect en réflexion des volumes avec encoche n'est jamais excellente, les verres comportant toujours dans ces régions de légers marquages et contre-bombages. Selon d'autres techniques de bombage, on peut former chaque feuille de verre séparément par pressage ou par formage au défilé entre des lits de rouleaux, puis les assembler dans un second temps. Contrairement au procédé par gravité, cette technique évite les instabilités du verre sur son outillage lors du bombage. Néanmoins, ce procédé dit feuille à feuille est extrêmement sensible à toute imperfection de parallélisme des deux feuilles de verres l'une par rapport à l'autre, ce qui, le cas échéant, se traduit par des casses ou par l'apparition de bullage périphérique sur le vitrage une fois assemblé. Les vitrages ayant des encoches sont en effet particulièrement sensibles à ce phénomène.

Toutes ces difficultés augmentent considérablement lorsque l'on cherche à produire des pièces dont les encoches sont plus profondes à l'intérieur de la surface du verre. Enfin, outre les difficultés précitées, le rayon minimum de la découpe de l'encoche est limité par les diamètres standards des meules de façonnage des bords. Obtenir des encoches avec de petits rayons nécessite ou bien une machine adaptée supplémentaire ou bien l'utilisation de meules de petit diamètre qui ne sont pas adaptées à un façonnage efficace, c'est-à-dire rapide et avec une bonne qualité, de la partie restante de la périphérie de la pièce. Il est clair que la technique actuelle est incompatible avec le développement de toits aux formes plus « englobantes », c'est-à-dire recouvrant les parties latérales du véhicule. En effet la fixation des barres de toit se situerait alors à l'intérieur de la surface générale de la pièce. La présence d'encoches très profondes, proscrites pour les raisons de procédé de transformation décrites plus haut, nécessiterait un cache situé entre le bord supérieur de la portière et les points de fixation des barres de toit. Un tel cache serait très inesthétique et ce, d'autant plus qu'il serait situé de façon très apparente pour une personne située à côté du véhicule.

Comme on l'a vu précédemment, le bombage d'un vitrage avec encoche est très spécifique et nécessite une mise au point délicate. Il est économiquement impossible de proposer au constructeur des vitrages sans encoches pour des véhicules du même type mais vendus sans barres de toit. En effet, une telle option nécessiterait de fabriquer un nouveau lot d'outillages et des campagnes de fabrication différentes.

L'invention obvie aux inconvénients cités plus haut. En effet, selon l'invention, on ne réalise plus d'encoches aux bords des vitrages, ce qui élimine les problèmes de fabrication liés à leur réalisation lors de la découpe et du bombage. On réalise, en remplacement des encoches, des orifices dont le contour est entièrement compris dans les faces principales du toit en verre. La qualité optique en réflexion du toit en est améliorée. On peut ainsi envisager des designs de toit plus innovants, avec des formes prolongées sur les côtés et qui peuvent habiller les parties latérales de la carrosserie. Il est même envisageable d'avoir des toits en verre arrivant jusqu'au niveau des portières. L'expression « face principale » est utilisé pour désigner les grandes surfaces d'objets du type panneau, feuille, vitrage : tous ces objets comprennent deux faces principales et une tranche.

L'invention concerne un toit de véhicule automobile consistant en un vitrage pouvant être en verre feuilleté ou trempé, et comprenant des zones locales de contraintes en compression entourant chacune un orifice ou destinées à entourer un orifice ultérieurement percé. Si le vitrage ne comprend pas d'orifice, alors le vitrage est feuilleté et non trempé (il ne comprend pas de feuille trempée) et des orifices peuvent être réalisées après assemblage en feuilleté dans les zones locales de contrainte en compression.

S'il est feuilleté, le vitrage comprend au moins deux feuilles de verre minéral non trempées, séparées par une feuille en matériau polymère, généralement en polyvinylbutyral (PVB). Il peut comprendre plus que deux feuilles de verre (notamment 3 feuilles), étant entendu qu'une feuille de matériau polymère sépare les différentes feuilles de verre.

S'il est trempé, le vitrage comprend une seule feuille de verre minéral trempé.

Si l'aire d'une de ses faces principales est supérieure à 0,9 m², on préfère que le vitrage soit feuilleté.

L'aire d'une face principale du vitrage est égale à l'aire d'une face principale de la feuille de verre minéral.

Le produit selon l'invention est un toit de véhicule en verre feuilleté ou trempé, percé ou pouvant être percé en plusieurs points, et où chaque ouverture sert au passage d'un arbre de fixation des barres de toit à la structure du véhicule. Le bord des trous dans le verre peut être habillé d'un enjoliveur de dimensions modestes solidaire de la barre de toit.

L'invention concerne un toit de véhicule automobile comprenant deux bords longitudinaux et deux bords transversaux, symétrique par rapport à un plan longitudinal médian, comprenant au moins une feuille de verre minéral, ladite feuille comprenant une ceinture de contraintes de bords en compression, ladite feuille comprenant au moins deux zones locales de contraintes en compression à l'intérieur de ladite ceinture et placées symétriquement par rapport audit plan de symétrie, chaque zone locale de contraintes en compression étant à moins de 30 cm d'un bord longitudinal. Généralement, les zones locales de contraintes en compression sont à moins de 20 cm d'un bord longitudinal.

Le toit présente quatre bords extérieurs, deux bords étant longitudinaux correspondant à la direction de déplacement du véhicule, et deux bords étant transversaux et perpendiculaires à la direction de déplacement du véhicule. Le plan longitudinal médian est vertical lorsque le toit est monté sur le véhicule et est perpendiculaire au toit et aux bords transversaux en leur milieu. Ce plan longitudinal médian est un plan de symétrie pour le toit à la fois pour ce qui est visuel mais aussi au niveau de la structure et des contraintes dans le verre.

La feuille de verre comprend une ceinture de contraintes de bords en compression lui conférant une bonne tenue mécanique. Si le toit contient plusieurs feuilles de verre (cas d'un vitrage feuilleté), chacune des feuilles comprend une ceinture de contraintes de bords en compression. L'homme du métier sait réaliser ce genre de ceinture faisant tout le tour du vitrage, qu'il s'agisse d'un verre trempé ou non.

Selon l'invention, le verre, dans la ceinture de contraintes de bords ainsi qu'aux zones locales de contrainte à l'intérieur de ladite ceinture comprend des contraintes de compression permanentes d'intensité suffisamment élevée pour permettre à la pièce verrière de résister aux diverses sollicitations mécaniques auxquelles elle est soumise durant son utilisation notamment lors de sa manipulation, de son transport, de son montage sur la carrosserie du véhicule, de la déformation du châssis de la caisse du véhicule, d'efforts externes appliqués d'origine mécanique (exemple : sacoche posée directement sur le toit, chocs divers...) ou d'origine thermiques (chauffage du véhicule par temps froid ou voiture à l'arrêt sous un fort soleil...). Les niveaux utiles de contraintes de compression de bord sont adaptés à l'intensité des sollicitations mécaniques ou thermomécaniques auxquelles ces bords peuvent être soumis.

Les contraintes dans les produits verriers sont générées lorsque le verre est chauffé à une température à partir de laquelle il perd sont comportement élastique pur et devient légèrement plastique, du type liquide viscoélastique. Lors du refroidissement et en fonction de l'inhomogénéité thermique initiale de l'échantillon et/ou de l'hétérogénéité du refroidissement lui-même, certaines zones se figent avant d'autres. A cause de la dilatation thermique, des contraintes permanentes de compression et d'extension apparaissent au sein de l'échantillon lors de son refroidissement. Qualitativement, les parties où le verre s'est figé en premier lieu correspondent aux parties où se concentrent les contraintes de compression alors que les parties où le verre s'est figé avec retard concentrent les zones de contraintes en extension. Les contraintes de bord décrites dans la présente demande sont des contraintes de membrane qui peuvent se définir en tout point M du matériau et pour une direction donnée, comme la moyenne du champ contrainte en ce point et selon cette direction, la moyenne étant effectuée dans toute l'épaisseur de l'échantillon. En bord d'échantillon, seule la composante de contraintes de membrane parallèle au bord est appropriée ; la composante perpendiculaire a une valeur nulle. Aussi toute méthode de mesure permettant une mesure des contraintes moyennes le long d'un bord et à travers l'épaisseur de l'échantillon est pertinente. Les méthodes de mesure des contraintes de bord utilisent les techniques de photoélasticimétrie. Les deux méthodes décrites dans des normes ASTM citées ci-dessous permettent de mesurer les valeurs de contraintes de bord :
- la méthode utilisant le compensateur de Babinet et décrites dans la norme ASTM C1279 - 2009 - 01, procedure B;
- les mesures effectuées avec des appareils du commerce comme le Sharples modèle S-67 commercialisé par la société Sharples Stress Engineers, Preston, UK et utilisant un compensateur dit de Sénarmont ou Jessop-Friedel. Le principe de la mesure est décrit dans la norme ASTM F218 - 2005 - 01;
Dans le cadre de la présente demande, les valeurs de contraintes en compression sont déterminées par la méthode décrite dans la norme ASTM F218 - 2005 - 01.

Généralement, les contraintes de bord, dans la ceinture de contraintes ou dans les zones locales de contraintes sont comprises entre 1 et 100 MPa.

Le vitrage faisant office de toit comprend des zones locales de contraintes en compression venant à l'intérieur de la ceinture de contraintes de bord. L'expression « à l'intérieur de la ceinture » signifie que les zones locales ne sont pas sur la ceinture, mais au contraire qu'elles se distinguent de la ceinture en venant plus vers le centre du vitrage que la ceinture. Ces zones locales peuvent par contre toucher ou joindre la ceinture. Ces zones locales soit entourent un orifice et font office de contrainte de bord de l'orifice, soit n'entourent pas un orifice mais sont destinées à éventuellement entourer un orifice et faire alors office de contrainte de bord de l'orifice. Des valeurs de contraintes de compression entre 1 et 4 MPa pourront suffire pour des petits perçages situés loin des bords extérieurs de la pièce. Des niveaux intermédiaires entre 4 et 8 MPa, voire supérieurs, entre 8 et 12 MPa, confèrent à la pièce une meilleure résistance avec un risque de casse plus faible. Ainsi, ces contraintes de compression de bord dans ces zones locales sont généralement comprises entre 1 et 100 MPa et sont de préférence comprises entre 4 et 12 MPa dans le cas d'un vitrage feuilleté et entre 15 et 60 MPa dans le cas d'un vitrage trempé. Généralement ces valeurs sont déterminées entre 0,1 et 2 mm du bord et de préférence entre 0,5 et 1 mm du bord. Pour le cas ou une zone locale de contrainte en compression n'entoure pas un orifice dans la mesure ou c'est une zone laissant la possibilité de créer un orifice ultérieurement, alors la valeur de contrainte est déterminable après perçage d'un orifice suivi de la mesure de la contrainte à la distance du bord de l'orifice comme cela vient d'être indiqué.

De la même façon que pour les pièces en verre feuilletées ou trempées classiques (pare-brise, toits, lunette, vitres latérales), la périphérie du vitrage est elle aussi renforcée mécaniquement par la présence d'une ceinture de contraintes de compression de bords permanentes. Les niveaux de contraintes de compressions utiles correspondent à des contraintes de compression supérieures à 4 MPa, voire dans certains cas particuliers supérieures à 8 Mpa. Ainsi, ces contraintes de compression de bord en périphérie du vitrage sont généralement comprises entre 4 et 100 MPa et sont de préférence comprises entre 8 et 30 MPa dans le cas d'un vitrage feuilleté et entre 15 et 60 MPa dans le cas d'un vitrage trempé.

La ceinture de contraintes de compression de bords présente généralement une largeur sur chaque face principale du vitrage de 0,1 à 3 cm à compter du bord extérieur.

Les barres de toit sont munies d'éléments de fixation au véhicule automobile. Ces éléments servent d'une part à relier fixement et solidement les barres au véhicule, et d'autre part à ménager une certaine distance (généralement de 1 à 20 cm) entre les barres et le toit. Cette distance permet de fixer des objets aux barres de toit en passant des organes de fixation entre les barres et le toit.

Les barres de toit peuvent être disposées parallèlement au sens de déplacement du véhicule (sens longitudinal), auquel cas elles sont liées au véhicule par deux ou trois points de fixation via des éléments (arbres) de fixation traversant le toit. Les barres de toit peuvent être disposées perpendiculairement par rapport au sens de déplacement du véhicule (sens transversal), auquel cas elles sont liées au véhicule par deux points de fixation via des arbres de fixation traversant le toit. Dans tous les cas, il y a une symétrie en ce qui concerne la position des orifices pour le passage des arbres de fixation par rapport au plan vertical parallèle au sens de déplacement du véhicule et passant par le milieu du toit (ainsi que par son barycentre). Le vitrage selon l'invention faisant office de toit est entièrement symétrique par rapport à ce plan passant par le milieu de son bord transversal avant et le milieu de son bord transversal arrière (même sens que celui du véhicule auquel il est destiné).

Monté sur le véhicule automobile, le toit comprenant le vitrage selon l'invention peut être équipé de barres de toit. En alternative, on peut ne pas équiper le véhicule de barres de toit, auquel cas les orifices peuvent être habillés avec un cache amovibles, de préférence discret, en attendant l'installation éventuelle des barres de toit. Le propriétaire du véhicule a ainsi la possibilité de monter des barres de toit sur son véhicule durant la vie de celui-ci.

Pour le cas ou la feuille de verre du vitrage est trempée, elle est généralement l'unique feuille de verre dans le vitrage. On peut fabriquer ce vitrage comme suit : on part d'une feuille de verre plan non trempée, découpée en forme et percée. On procède ensuite à son bombage à chaud suivi de sa trempe. Les contraintes de bord sont ainsi réalisées en ceinture de la feuille et autour des orifices. Si le vitrage est trempé, les orifice sont toujours réalisés avant la trempe.

Pour le cas ou le toit est en verre feuilleté, selon un premier mode de réalisation, il comprend les orifices pour le passage des éléments de fixation (arbres) des barres de toit. Pour réaliser ce vitrage , on peut partir de deux feuilles de verre plan découpées en forme et percées. Ces feuilles sont ensuite bombées, soit simultanément à l'état accolé comme dans les procédés classiques de bombage par gravité de produits feuilletés, soit feuille à feuille (auquel cas les feuilles sont bombées l'une après l'autre). Le refroidissement contrôlé du verre permet d'installer les contraintes de compression permanentes sur la périphérie du vitrage et sur la périphérie des trous. Le produit est ensuite assemblé et passé en autoclave avant de subir une étape de finition. On obtient ainsi un vitrage feuilleté muni d'orifices pour le passage de barres de toit. Si des niveaux de contraintes spécifiques doivent être obtenus au niveau des bords de trous, il est possible d'utiliser des procédés de traitement thermiques locaux à l'aide de soufflettes d'air, de caches en matériaux isolants, de tampons froids ou chauds appliqués sur le verre ou de dépôt de couches permettant de moduler localement l'émissivité de la surface des feuilles de verre. Ces adaptations locales du refroidissement sont connues et régulièrement utilisés par les transformateurs verriers.

Toujours pour le cas ou le toit est un vitrage en verre feuilleté, mais selon un second mode de réalisation, le vitrage ne comprend pas les orifices pour les barres de toit mais comprend les contraintes de compression permettant de percer les orifices sur le vitrage après formage et assemblage et conférant les contraintes de bord renforçant ceux-ci. On peut ainsi livrer un toit sans trou apparent (et ayant donc un aspect esthétique parfait) mais dont l'état de contraintes particulier permet de réaliser les trous pour le passage des éléments de fixation des barres de toit directement sur le véhicule. Un tel perçage du vitrage en verre feuilleté peut être réalisé dans un atelier de réparation standard (garage) au moyen d'outils portatifs adaptés à l'usinage du verre lors de l'opération de montage des barres de toit sur le véhicule. Pour ce mode de réalisation, on peut notamment procéder comme suit. On procède tout d'abord au formage simultané des différents substrats devant être assemblés ensemble dans un vitrage feuilleté. Pour ce faire, on les accole (par exemple on les superpose) et on les bombe ensemble. On obtient ainsi des feuilles présentant toutes la même forme et se laissant de ce fait bien assembler. Après formage à chaud, pendant la phase de refroidissement des substrats verriers accolés ensemble, on procure un refroidissement local adapté mettant localement en compression toute l'épaisseur des substrats verriers accolés aux endroits où les perçages pour les barres de toit sont envisagés. Ce refroidissement local vient en plus du refroidissement général contrôlé de l'empilement de substrats verrier. Ce refroidissement local est plus rapide que le refroidissement général. On peut dire qu'il est différencié dans la mesure où c'est la différence de refroidissement entre le refroidissement général et le refroidissement local qui est à l'origine des contraintes de compression locales. On réalise de préférence le refroidissement local différencié pour que les contraintes de bord de l'orifice ou du futur orifice soient celles déjà données plus haut lorsqu'il était question des zones locales de contraintes en compression (1 à 100 MPa et de préférence entre 4 et 12 MPa). Le procédé de fabrication d'un vitrage feuilleté comprenant des zones de contrainte en compression pour permettre un perçage après assemblage est décrit dans la demande de brevet français n° 1159322 du 14 octobre 2011. Le refroidissement local différencié est réalisé entièrement à l'intérieur d'une face principale d'un substrat verrier en position externe dans son empilement de substrats verriers. Ce mode de réalisation permet d'effectuer les perçages de la pièce après assemblage du vitrage feuilleté, et éventuellement, comme précisé ci-dessus, d'effectuer le perçage après le montage du toit sur le véhicule. Dans ce cas, un marquage (discret, indélébile et effectué directement sur le vitrage) de l'endroit où l'on doit effectuer le perçage est recommandé. Cet endroit est celui ou le refroidissement local différencié a été effectué. La zone refroidie localement est un peu plus large que la zone finalement évidée.

Ces différentes versions de vitrage de verre feuilleté (avec trou, ou sans trou mais dans ce cas avec les contraintes de compression permettant le perçage) peuvent être réalisées avec les mêmes outillages (notamment le bombage des substrats verriers), éliminant ainsi la nécessité de fabriquer deux types d'outillages et avec une mise au point réduite entre les deux types de version. Ces mêmes outillages peuvent aussi servir à fabriquer une gamme de vitrages sans trou et sans contraintes de compression (non perçable). L'acheteur du véhicule automobile peut donc avoir le choix entre trois options différentes pour le même modèle et à peu de frais pour le fabricant.

Le vitrage faisant office de toit selon l'invention comprend généralement au moins deux orifices ou au moins deux zones locales de contraintes en compression à l'intérieur des faces principales, pour permettre la fixation d'une barre de toit. L'existence éventuelle de zones de contraintes en compression à l'intérieur des faces principales pour le perçage de trous sur le vitrage fini ne concerne que les vitrages feuilletés. Ces orifices ou zones locales de contraintes en compression sont placés symétriquement par rapport au plan de symétrie du vitrage passant par le milieu de la bande avant et le milieu de la bande arrière du vitrage (plan longitudinal médian). Le vitrage selon l'invention peut comprendre deux, quatre ou six orifices ou, dans le cas d'un vitrage feuilleté, deux, quatre ou six zones de contraintes en compression, permettant la fixation de deux barres de toit. Chaque orifice présente généralement une aire comprise entre 0,5 et 70 cm² dans une face principale du vitrage. Ces trous peuvent être circulaires ou polygonaux, notamment à quatre côtés. Dans le cas de la présence de zones locales de contraintes en compression, chacune de ces zones est plus étendue que l'orifice prévu, pour que la zone de contrainte en compression entoure bien l'orifice après son perçage. Chaque orifice est généralement à au moins 0,5 cm des bords extérieurs du vitrage et est à l'intérieur (c'est-à-dire entouré) d'une zone de contraintes en compression. La zone de contrainte en compression dépasse généralement du bord de l'orifice d'au moins 1 mm et jusqu'à 1 cm, voire jusqu'à 10 cm. La zone de contrainte en compression entourant un orifice ou destinée au perçage ultérieur d'un orifice peut atteindre la ceinture de contrainte en compression présente au bord extérieur du vitrage. On peut donc avoir localement une zone de compression commune pour le bord de trou et le bord du vitrage.

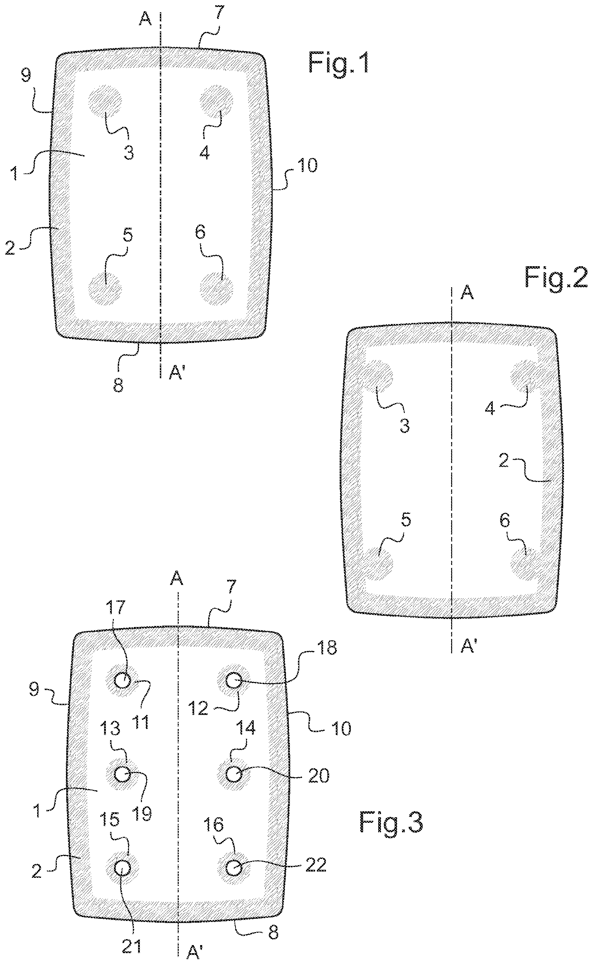

La figure 1 représente un toit de véhicule automobile comprenant un vitrage feuilleté, vu perpendiculairement à l'une des faces principales 1. Ce vitrage feuilleté comprend deux bords transversaux 7 et 8 et deux bords longitudinaux 9 et 10. Il comprend une ceinture 2 de contraintes en compression de bords faisant tout le tour du vitrage. Le plan longitudinal médian AA' (perpendiculaire à la figure) est un plan de symétrie du vitrage et est perpendiculaire aux bords transversaux 7 et 8 qui sont opposés entre eux. A l'intérieur de la ceinture de contraintes en compression de bords se trouvent quatre zones locales de contraintes en compression 3, 4, 5, 6. Ces zones locales ne joignent pas ici la ceinture. Ces zones de compression sont représentées par des hachures mais dans la réalité, elles ne sont pas visibles à l'oeil nu. Les zones locales 3 et 4 sont placées symétriquement l'une vis-à-vis de l'autre par rapport au plan de symétrie AA'. Les zones locales 5 et 6 sont placées symétriquement l'une vis-à-vis de l'autre par rapport au plan de symétrie AA'. Ces zones locales offrent la possibilité de percer des orifices au travers du vitrage feuilleté pour le passage d'éléments de fixation de barres de toit. Deux barres de toit peuvent être fixées, soit parallèlement au plan de symétrie AA' entre les points 3 et 5 pour l'une et entre les points 4 et 6 pour l'autre, soit perpendiculairement au plan de symétrie AA', entre les points 3 et 4 pour l'une et entre les points 5 et 6 pour l'autre.
La figure 2 représente les mêmes éléments que la figure 1 sauf que les zones de contraintes locales en compression 3, 4, 5, 6 joignent la ceinture de contraintes en compression de bords 2.
La figure 3 représente un toit de véhicule automobile comprenant un vitrage feuilleté ou trempé (une seule feuille de verre dans ce dernier cas), vu perpendiculairement à l'une des faces principales 1. Ce vitrage feuilleté comprend deux bords transversaux 7 et 8 et deux bords longitudinaux 9 et 10. Il comprend une ceinture 2 de contraintes en compression de bords faisant tout le tour du vitrage. Le plan longitudinal médian AA' (perpendiculaire à la figure) est un plan de symétrie du vitrage et est perpendiculaire aux bords transversaux 7 et 8 qui sont opposés entre eux. A l'intérieur de la ceinture de contraintes en compression des bords extérieurs se trouvent six zones locales de contraintes en compression 11, 12, 13, 14, 15, 16. Ces zones locales ne joignent pas ici la ceinture. Les zones locales 11 et 12 sont placées symétriquement l'une vis-à-vis de l'autre par rapport au plan de symétrie AA'. Les zones locales 13 et 14 sont placées symétriquement l'une vis-à-vis de l'autre par rapport au plan de symétrie AA'. Les zones locales 15 et 16 sont placées symétriquement l'une vis-à-vis de l'autre par rapport au plan de symétrie AA'. Ces zones locales entourent chacune un orifice 17, 18, 19, 20, 21, 22 au travers du vitrage pour le passage d'éléments de fixation de barres de toit. Deux barres de toit peuvent être fixées dans le sens longitudinal, l'une étant maintenue par des éléments de fixation aux points 17, 19, 21, l'autre étant maintenue par des éléments de fixation aux points 18, 20, 22.

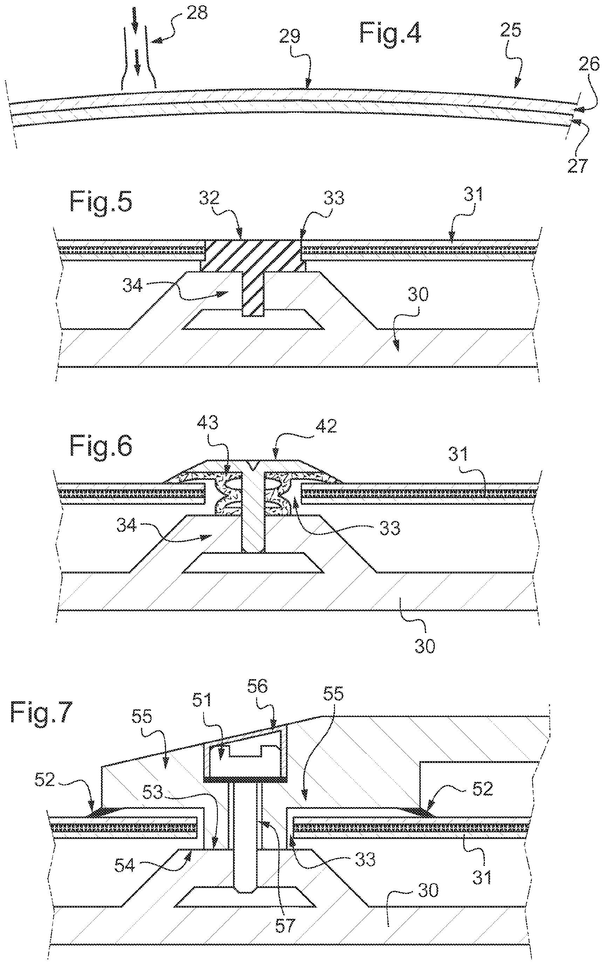

La figure 4 représente un empilement 25 de deux feuilles de verre 26 et 27 pendant son refroidissement juste après bombage. Ces deux feuilles de verre ont vocation à être assemblées ultérieurement dans un vitrage feuilleté. La buse 28 vient souffler sur une zone d'une face principale 29 du substrat verrier 26 (il s'agit ici d'un exemple, car le soufflage pourrait être exercé sur une seule ou sur les deux faces principales simultanément) de l'empilement de façon à créer une zone de contraintes en compression permettant le perçage du vitrage feuilleté assemblé, même après montage sur le véhicule.
La figure 5 représente un agencement possible du système de fixation des barres de toit sur la structure 30 du véhicule et du vitrage de verre feuilleté 31 selon l'invention. Sur cette figure, les barres de toit ne sont pas montées, un capuchon 32 venant masquer les orifices 33 prévus dans le vitrage 31 pour réaliser cette fixation éventuelle. Le trou dans le vitrage de verre se trouve en regard d'un bossage taraudé 34. Le capuchon 32 en matière plastique permet de
   - masquer le trou effectué dans le vitrage ;
   - assurer l'étanchéité principale du système en évitant que des quantités importantes d'eau puissent pénétrer entre le verre et la structure lors d'un stationnement ou d'une circulation par temps de pluie.

   Un système non représenté sur cette figure peut permettre de drainer les éventuelles infiltrations d'eau résiduelles vers l'avant ou l'arrière du véhicule. Le capuchon peut être en matière plastique souple, ce qui lui permet avantageusement de se déformer afin de s'adapter latéralement lorsque le trou 33 du toit en verre et le trou taraudé dans le bossage 34 ne sont pas parfaitement alignés.
La figure 6 représente un autre mode possible de masquage du trou effectué dans le vitrage à l'aide d'une vis 42 faisant office de capuchon de masquage et d'un joint de compensation 43. On distingue la structure 30 du véhicule et le vitrage de verre feuilleté 31 selon l'invention. Sur cette figure, les barres de toit ne sont pas montées, le capuchon 42 venant masquer les orifices 33 prévus dans le vitrage 31 pour réaliser cette fixation éventuelle. Le trou dans le vitrage de verre se trouve en regard du bossage taraudé 34.
La figure 7 représente une section du système des figures 5 et 6 mais avec une barre de toit 55 fixée au travers d'orifices 33 dans le toit en verre feuilleté 31 selon l'invention. Cette dernière est maintenue à l'aide d'une vis 51 fixée à la carrosserie. Un joint à lèvre 52 périphérique souple permet :
   - d'absorber la dispersion des distances existant entre le dessus du bossage et la surface supérieure du verre ;
   - assurer l'étanchéité primaire du système ;
   - d'obtenir une continuité entre la barre de toit et le vitrage 31 et donc une belle finition de l'ensemble.

Une surface d'appui 53 de la barre de toit sur une surface d'appui 54 de la structure du véhicule a été prévue afin de permettre une bonne transmission des éventuels efforts exercés sur les barres de toit lors de leur utilisation (action manuelle, prise au vent, accélération, mise en place de sangles de fixation, etc.). La largeur de ces points d'appui est inférieure à la dimension du perçage du toit afin de pouvoir rattraper une concentricité imparfaite de ce dernier avec les points d'ancrage. Le trou 57 permettant le passage de la vis dans la barre de toit a un diamètre suffisant pour permettre de rattraper les dispersions de positionnement des points de fixation par rapport aux trous de la barre de toit. Un capuchon 56 permet de masquer la tête de vis de l'extérieur avec une bonne esthétique.

## Revendications

1. Toit de véhicule automobile comprenant deux bords longitudinaux (9, 10) et deux bords transversaux (7, 8), symétrique par rapport à un plan longitudinal médian AA', consistant en un vitrage comprenant au moins une feuille de verre minéral, **caractérisé en ce que** ladite feuille comprend une ceinture de contraintes de bords en compression (2), ladite feuille comprenant au moins deux zones locales de contraintes en compression (3, 4, 5, 6) à l'intérieur de ladite ceinture (2) et placées symétriquement par rapport audit plan de symétrie AA', chaque zone locale de contraintes en compression étant à moins de 30 cm d'un bord longitudinal (9, 10).

2. Toit selon la revendication précédente **caractérisé en ce qu'**au moins deux zones locales de contraintes en compression (3, 4, 5, 6) joignent la ceinture de contraintes de bords en compression (2).

3. Toit selon l'une des revendications précédentes, **caractérisé en ce que** les contraintes en compression dans la ceinture (2) sont comprises entre 1 et 100 MPa.

4. Toit selon l'une des revendications précédentes, **caractérisé en ce que** les deux zones locales de contraintes en compression (11, 12, 13, 14, 15, 16) entourent chacune un orifice (17, 18, 19, 20, 21, 22).

5. Toit selon la revendication précédente, **caractérisé en ce que** les contraintes en compression au bord de l'orifice sont comprises entre 1 et 100 MPa.

6. Toit selon la revendication précédente, **caractérisé en ce que** les orifices (17, 18, 19, 20, 21, 22) sont à au moins 0,5 cm des bords extérieurs du vitrage (7, 8, 9, 10).

7. Toit selon l'une des deux revendications précédentes, **caractérisé en ce que** chaque orifice (17, 18, 19, 20, 21, 22) présente une aire comprise entre 0,5 et 70 cm².

8. Toit selon l'une des revendications précédentes **caractérisé en ce que** la feuille de verre minéral est trempée.

9. Toit selon la revendication précédente, **caractérisé en ce que** les contraintes de compression de bord dans les dans les zones locales de contrainte de compression sont comprises entre 15 et 60 Mpa dans le cas d'un vitrage trempé.

10. Toit selon l'une des revendications 1 à 7, **caractérisé en ce que** le vitrage (31) est feuilleté et comprend au moins deux feuilles de verre.

11. Toit selon la revendication précédente, **caractérisé en ce que** les contraintes de compression de bord dans les dans les zones locales de contrainte de compression sont comprises entre 4 et 12 MPa dans le cas d'un vitrage feuilleté.

12. Toit selon l'une des deux revendications précédentes, **caractérisé en ce que** l'aire de l'une des faces principales du vitrage est supérieure à 0,9 m².

13. Toit selon l'une des revendications 1 à 3, **caractérisé en ce que** le vitrage est feuilleté, les deux zones locales de contraintes en compression n'entourant aucun orifice.

14. Véhicule automobile muni d'un toit de l'une des revendications précédentes.

15. Véhicule automobile muni d'un toit de l'une des revendications 4 à 7 muni de barres de toit (55) munies d'éléments de fixations traversant lesdits orifices (33), ou muni de caches amovibles (32, 42) habillant lesdits orifices (33).

## Patentansprüche

1. Kraftfahrzeugdach mit zwei Längskanten (9, 10) und zwei Querkanten (7, 8), das in Bezug auf eine Mittellängsebene AA' symmetrisch ist, das aus einer Verglasung besteht, die wenigstens eine Scheibe aus Mineralglas umfasst, **dadurch gekennzeichnet, dass** die Scheibe einen Gürtel zur Kantendruckspannung (2) umfasst, wobei die Scheibe wenigstens zwei lokale Druckspannungsbereiche (3, 4, 5, 6) innerhalb des Gürtels (2) umfasst, die in Bezug auf die Symmetrieebene AA' symmetrisch angeordnet sind, wobei ein jeder lokale Druckspannungsbereich weniger als 30 cm von einer Längskante (9, 10) gelegen ist.

2. Dach nach dem vorhergehenden Anspruch, **dadurch gekennzeichnet, dass** wenigstens zwei lokale Druckspannungsbereiche (3, 4, 5, 6) den Kantendruckspannungsgürtel (2) verbinden.

3. Dach nach einem der vorhergehenden Ansprüche, **dadurch gekennzeichnet, dass** die Druckspannungen in dem Gürtel (2) zwischen 1 und 100 MPa betragen.

4. Dach nach einem der vorhergehenden Ansprüche, **dadurch gekennzeichnet, dass** die beiden lokalen Druckspannungsbereiche (11, 12, 13, 14, 15, 16) jeweils eine Öffnung (17, 18, 19, 20, 21, 22) umgeben.

5. Dach nach dem vorhergehenden Anspruch, **dadurch gekennzeichnet, dass** die Druckspannungen am Rand der Öffnung zwischen 1 und 100 MPa betragen.

6. Dach nach dem vorhergehenden Anspruch, **dadurch gekennzeichnet, dass** die Öffnungen (17, 18, 19, 20, 21, 22) wenigstens 0,5 cm von den Außenkanten der Verglasung (7, 8, 9, 10) gelegen sind.

7. Dach nach einem der beiden vorhergehenden Ansprüche, **dadurch gekennzeichnet, dass** eine jede Öffnung (17, 18, 19, 20, 21, 22) eine Fläche zwischen 0,5 und 70 cm² aufweist.

8. Dach nach einem der vorhergehenden Ansprüche, **dadurch gekennzeichnet, dass** die Mineralglasscheibe vorgespannt ist.

9. Dach nach dem vorhergehenden Anspruch, **dadurch gekennzeichnet, dass** im Fall einer vorgespannten Verglasung die Kantendruckspannungen in den lokalen Druckspannungsbereichen zwischen 15 und 60 MPa betragen.

10. Dach nach einem der Ansprüche 1 bis 7, **dadurch gekennzeichnet, dass** die Verglasung (31) mehrschichtig ist und wenigstens zwei Glasscheiben umfasst.

11. Dach nach dem vorhergehenden Anspruch, **dadurch gekennzeichnet, dass** im Fall einer Verbundverglasung die Kantendruckspannungen in den lokalen Druckspannungsbereichen zwischen 4 und 12 MPa betragen.

12. Dach nach einem der beiden vorhergehenden Ansprüche, **dadurch gekennzeichnet, dass** die Fläche von einer der Hauptseiten der Verglasung größer als 0,9 m² ist.

13. Dach nach einem der Ansprüche 1 bis 3, **dadurch gekennzeichnet, dass** die Verglasung mehrschichtig ist, wobei die beiden lokalen Druckspannungsbereiche keine Öffnung umgeben.

14. Kraftfahrzeug, das mit einem Dach nach einem der vorhergehenden Ansprüche ausgestattet ist.

15. Kraftfahrzeug, ausgestattet mit einem Dach nach einem der Ansprüche 4 bis 7, das mit Dachstangen (55), welche mit die Öffnungen (33) durchgreifenden Befestigungselementen versehen sind, oder mit die Öffnungen (33) verkleidenden lösbaren Abdeckungen (32, 42) versehen ist.

## Claims

1. An automotive vehicle roof that has two longitudinal edges (9, 10) and two transverse edges (7, 8), and that is symmetrical with respect to a median longitudinal plane, said roof consisting of a glazing unit comprising at least one mineral glass sheet, **characterized in that** said sheet comprises a border of compressive edge stresses (2), said sheet comprising at least two localized zones of compressive stress (3, 4, 5, 6) inside said border (2), said zones being placed symmetrically relative to said plane of symmetry and each localized zone of compressive stress being less than 30 cm from a longitudinal edge (9, 10).

2. The roof as claimed in the preceding claim, **characterized in that** at least two localized zones of compressive stress (3, 4, 5, 6) adjoin the border of compressive edge stresses (2).

3. The roof as claimed in one of the preceding claims, **characterized in that** the compressive stresses in the border (2) are between 1 and 100 MPa in magnitude.

4. The roof as claimed in one of the preceding claims, **characterized in that** the two localized zones of compressive stress (11, 12, 13, 14, 15, 16) each surround an orifice.

5. The roof as claimed in the preceding claim, **characterized in that** the compressive stresses at the edge of the orifice are between 1 and 100 MPa in magnitude.

6. The roof as claimed in the preceding claim, **characterized in that** the orifices (17, 18, 19, 20, 21, 22) are located at least 0.5 cm from the external edges (7, 8, 9, 10) of the glazing unit.

7. The roof as claimed in one of the two preceding claims, **characterized in that** each orifice (17, 18, 19, 20, 21, 22) is between 0.5 and 70 cm² in area.

8. The roof as claimed in one of the preceding claims, **characterized in that** the mineral glass sheet is tempered.

9. The roof as claimed in the preceding claim, **characterized in that** the edge compressive stress in the localized zones of compressive stress are comprised between 15 and 60 Mpa in case of a tempered glazing unit.

10. The roof as claimed in one of claims 1 to 7, **characterized in that** the glazing unit (31) is laminated and comprises at least two glass sheets.

11. The roof as claimed in the preceding claim, **characterized in that** the edge compressive stress in the localized zones of compressive stress are comprised between 4 and 12 MPa in case of a tempered glazing unit..

12. The roof as claimed in one of the two preceding claims, **characterized in that** the area of one of its main faces is larger than 0.9 m².

13. The roof as claimed in one of claims 1 to 3, **characterized in that** the glazing unit is laminated, there being no orifices surrounded by the two localized zones of compressive stress.

14. An automotive vehicle equipped with a roof as claimed in the preceding claim.

15. An automotive vehicle equipped with a roof as claimed in one of claims 4 to 7, said roof being equipped with roof rails (55) equipped with fastening elements that pass through said orifices (33) or equipped with removable covers (32, 42) fitting said orifices (33).
